# EUROPÄISCHE PATENTSCHRIFT

(11) **EP 1 163 288 B1**
(45) Veröffentlichungstag und Bekanntmachung des Hinweises auf die Patenterteilung: **21.05.2003**
(21) Anmeldenummer: 00920441.3
(22) Anmeldetag: 23.02.2000
(51) Int. Cl.: C08J 9/00, C08L 63/00, C08J 9/32

(54) **HITZEHÄRTBARER, THERMISCH EXPANDIERBARER EPOXYHARZFORMKÖRPER**
HEAT-CURABLE, THERMALLY EXPANDABLE MOULDED PART
CORPS MOULE EXPANSIBLE A CHAUD, THERMODURCISSABLE

(30) Priorität: 03.03.1999 DE 19909270
(43) Veröffentlichungstag der Anmeldung: 19.12.2001
(73) Patentinhaber: Henkel Teroson GmbH, 69123 Heidelberg (DE)
(72) Erfinder: REITENBACH, Dirk, D-68789 St. Leon-Rot (DE); MUENZ, Xaver, D-69117 Heidelberg (DE)
(74) Vertreter: Scheffler, Ingolf
(86) Internationale Anmeldenummer: EP0001474
(87) Internationale Veröffentlichungsnummer: WO00052086

(56) Entgegenhaltungen:
- WO-A-93/00381
- WO-A-97/19124
- "GLYCIDATED POLYBUTADIENE DIOLS AS EPOXY RESIN MODIFIERS" RESEARCH DISCLOSURE,GB,INDUSTRIAL OPPORTUNITIES LTD. HAVANT, Nr. 416, Dezember 1998 (1998-12), Seite 1594 XP000834080 ISSN: 0374-4353

## Beschreibung

Die Erfindung betrifft hitzehärtbare, thermisch expandierende, bei Raumtemperatur nicht klebrige Formkörper, deren Verwendung sowie ein Verfahren zum Versteifen und/oder Verstärken von Karosseriebauteilen.

Metallische Leichtbauteile für eine konstant maßhaltige Serienfertigung mit vorgegebener Steifigkeit und Strukturfestigkeit werden immer häufiger benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen.

Die EP-A-0 798 062 schlägt Bauteile aus metallischem Schaumwerkstoff vor, bei denen der metallische Schaumwerkstoff aus einem Metallpulver und Treibmittel hergestellt wird und gegebenenfalls zwischen massivmetallischen Blechteilen in einer Presse bei hohen Temperaturen und hohen Drucken geformt werden. Ein derartiges Verfahren eignet sich nur für großformatige Bauteile, die außerhalb der Montagelinie eines Kraftfahrzeuges separat hergestellt werden und anschließend in den normalen Montageprozeß eingefügt werden. Das Einbringen und Aufschäumen von metallischen Schaumwerkstoffen ist nicht unter den Prozeßbedingungen einer normalen Fahrzeugmontagelinie möglich.

Die US-A-4,978,562 beschreibt einen spezifisch leichten, verstärkenden Türbalken aus einem Verbundmaterial bestehend aus einem Metallrohr, das teilweise durch ein spezifisch leichtes Polymer mit Zellstruktur gefüllt ist. Es wird vorgeschlagen, härtbare Harze auf der Basis von Epoxidharzen, Vinylesterharzen, ungesättigten Polyesterharzen und Polyurethanharzen mit den entsprechenden Härtern, Füllstoffen und zellbildenden Agenzien in einem Extruder zu mischen, diese Mischung zu einem Kern auszuhärten und so in das Metallrohr einzubringen, daß der Kern durch Reibungskräfte oder mechanisch in dem Rohr fixiert wird. Alternativ kann der Polymerkern aus flüssigem oder pastösem polymeren Material durch Gießen hergestellt werden und in das Rohr eingepreßt werden. Reaktive, hitzehärtbare und thermisch expandierende Formkörper werden nicht offenbart.

Die US-A-4,769,391 beschreibt ein vorgeformtes Verbundeinlegeteil zum Einlegen in einen hohlen Strukturkörper. Dieses Einlegeteil enthält eine Vielzahl thermoplastischer Granulate aus einer Mischung eines thermoplastischen Harzes und nicht expandierten, expandierbaren Mikrohohlkugeln und einer Matrix aus expandiertem Polystyrol, das die vorgenannten Granulate hält. Das thermoplastische Harz der Granulate kann dabei ein Thermoplast sein, wie beispielsweise ein thermoplastischer Polyester, oder es kann ein hitzehärtbares Epoxidharz sein. Nach dem Einlegen des Teils in den auszufüllenden Hohlkörper wird das Bauteil auf eine Temperatur erhitzt, die ein "Verdampfen" des expandierten Polystyrols bewirkt - Verdampfen bedeutet hier Abbau des expandierten Polystyrols zu einem dünnen Film oder Ruß. Gleichzeit expandieren die thermoplastischen Granulatkörner und härten gegebenenfalls aus, wobei je nach Expansionsgrad des Granulates mehr oder weniger große Hohlräume zwischen den einzelnen expandierten Granulatteilchen bestehen bleiben.

In analoger Weise beschreiben die US-A-4,861,097 und US-A-4,901,500 spezifisch leichte Verbundbalken aus geschäumten Polymeren und metallischen Strukturen zur Verstärkung von Fahrzeugtüren. Nach dieser Lehre wird der polymere Kernteil zunächst durch Herstellen eines flüssigen oder pastösen Verstärkungsmaterials gebildet, das anschließend in eine kanalartige Struktur injiziert oder gegossen wird und anschließend ausgehärtet wird. Danach wird dieses ausgehärtete Kernteil in die metallische Hohlkörperstruktur eingebracht. Alternativ kann der Kern vorgeformt oder durch Spritzguß vorgegossen werden und anschließend in den Hohlraum eingelegt werden.

Die WO 89/08678 beschreibt ein Verfahren und Zusammensetzungen zur Verstärkung von Strukturelementen, wobei das polymere verstärkende Material ein zweikomponentiges Epoxysystem ist, bei dem die eine Komponente eine teigartige Masse auf der Basis von Epoxidharzen ist und die zweite Komponente eine Mischung aus Füllstoffen, einem Farbpigment sowie einem flüssigen Härtungsagenz von teigiger Konsistenz ist. Unmittelbar vor der Einfüllung des verstärkenden Materials in die Hohlstruktur werden die beiden Komponenten gemischt, in die Hohlkörperstruktur eingetragen und ausgehärtet, wobei die Hohlkörperstruktur gegebenenfalls vorgeheizt werden kann.

Die WO 96/37400 beschreibt ein W-förmiges Verstärkungsgebilde, das ein thermisch expandierbares, harzartiges Material enthält und vor der Aushärtung in den zu verstärkenden Hohlkörper eingebracht wird. Die verstärkende polymere Matrix besteht vorzugsweise aus einem einkomponentigen, teigartigen System enthaltend ein Epoxidharz, einen Acrylnitril-Butadienkautschuk, Füllstoffe, hochfeste Glaskugeln, einen Härter sowie einen Beschleuniger und ein Treibmittel auf der Basis einer Azo-Verbindung oder einer Hydrazid-Verbindung.

Die WO 98/15594 beschreibt geschäumte Produkte für Anwendungen in der Automobilindustrie auf der Basis von vorzugsweise flüssigen, zweikomponentigen Epoxysystemen, bei denen die eine Komponente aus einem flüssigen Epoxidharz und Metallcarbonaten oder -bicarbonaten und die andere Komponente aus Pigmenten, gegebenenfalls Hohlkugeln sowie Phosphorsäure besteht. Beim Mischen der beiden Komponenten härten diese Zusammensetzungen unter Aufschäumen aus. Anwendungen zur Verstärkung oder Versteifung von hohlen Strukturen werden nicht offenbart.

Die polymeren Materialien des vorgenannten Standes der Technik eignen sich entweder nicht zur Herstellung von vorgeformten Formteilen, die zu einem späteren Zeitpunkt durch Erhitzen thermisch expandieren und dabei hitzehärtbar sind oder, falls sie sich dazu eignen, haben sie in der Regel eine stark klebrige Oberfläche, die zu einer Verschmutzung der Lagerflächen führt, und andererseits Schmutz und Staub bindet. Außerdem behindert eine klebrige Oberfläche dieser Formteile die Handhabung und insbesondere die Lagerung, z. B. das Stapeln mehrerer Teile übereinander. Aus diesem Grunde werden Formteile des Standes der Technik mit einer Schutzfolie versehen, die unmittelbar vor der Anwendung entfernt wird. Derartige Schutzfolien machen jedoch die Herstellung und Anwendung von solchen Formteilen aufwendiger, zudem muß die Schutzfolie nach Entfernung entsorgt werden, was zusätzliche Kosten verursacht.

Vor dem Hintergrund dieses Standes der Technik haben sich die Erfinder die Aufgabe gestellt, nicht klebrige Formteile zur Verstärkung und/oder Versteifung von Blechen oder metallischen Hohlkörpern bereitzustellen, die
- hitzehärtbar sind,
- thermisch expandierbar sind,
- gute versteifende und/oder verstärkende Wirkung für dünnwandige, metallische Strukturen aufweisen,
- und bei der Verarbeitung, insbesondere beim Aushärten keine oder nur minimale Geruchsbelästigung verursachen.

Die erfindungsgemäße Lösung der Aufgabe ist den Patentansprüchen zu entnehmen, sie besteht im wesentlichen in der Bereitstellung hitzehärtbarer, thermisch expandierender Formkörper auf der Basis a) mindestens eines festen reaktiven Harzes, b) mindestens eines flüssigen reaktiven Harzes, c) mindestens eines flexibilisierenden reaktiven Harzes, d) mindestens eines Härters und/oder Beschleunigers e) sowie eines Treibmittels.

Ein weiterer Gegenstand der vorliegenden Erfindung ist die Verwendung der hitzehärtbaren und thermisch expandierbaren Formkörper zur Versteifung und Verstärkung von flächigen Blechteilen und/oder metallischen Hohlstrukturen, insbesondere von Karosseriehohlteilen wie Karosserierahmen, Karosserieträgern und -säulen im Automobilbau. Zu versteifende und/oder verstärkende Hohlstrukturen im Sinne der vorliegenden Erfindung können jedoch auch separat in die Türen eingebrachte Profile und Rohrkonstruktionen sein, die eine Verbesserung des Seitenaufprallschutzes bewirken sollen.

Ein weiterer Gegenstand der vorliegenden Erfindung betrifft ein Verfahren zum Versteifen und/oder Verstärken von Karosseriebauteilen, bei dem in einem ersten Schritt die Bindemittel mit Füllstoffen, Härtern, Treibmitteln sowie gegebenenfalls Pigmenten und Fasern gemischt werden, worauf diese gegebenenfalls leicht erwärmten Mischungen extrudiert oder in Formen gegossen werden. Nach dem Abkühlen der Formteile auf Raumtemperatur weisen diese keinerlei Oberflächenklebrigkeit auf. Ein weiterer Schritt des erfindungsgemäßen Verfahrens beinhaltet das Aufbringen der Formteile auf das metallische Substrat oder das Einbringen in den zu versteifenden Hohlraum, gegebenenfalls unter Erwärmen auf den Erweichungsbereich des Formkörpers, gefolgt von einem Erwärmen auf Temperaturen zwischen 110 und 220 °C, wobei das Volumen des Formkörpers um 50 bis 100 % expandiert und die Reaktionsharz-Matrix zu einem Duroplasten aushärtet.

Als feste, flüssige und flexibilisierende, reaktive Harze können grundsätzlich Polyurethane mit freien oder blockierten Isocyanaten eingesetzt werden, weiterhin geeignet sind ungesättigte Polyester-/Styrolsysteme, Polyester-/Polyolmischungen, Polymercaptane, Siloxanfunktionelle reaktive Harze oder Kautschuke, ganz besonders geeignet sind jedoch reaktive Harze auf Basis von reaktiven Epoxidgruppen.

Als Epoxidharze eignen sich eine Vielzahl von Polyepoxiden, die mindestens 2 1,2-Epoxigruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenote sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten, wobei die flüssigen Epoxidharze vorzugsweise auf der Basis des Bisphenols A sind und ein hinreichend niedriges Molekulargewicht aufweisen. Die bei Raumtemperatur flüssigen Epoxidharze haben in der Regel ein EpoxidÄquivalentgewicht von 150 bis etwa 480, besonders bevorzugt ist ein Epoxi-Äquivalentgewichtbereich von 182 bis 350.

Die bei Raumtemperatur festen Epoxidharze sind ebenfalls aus Polyphenolen und Epichlorhydrin erhältlich, besonders bevorzugt sind hier solche auf der Basis von Bisphenol A oder Bisphenol F mit einem Schmelzpunkt zwischen 45°C und 90°C, vorzugsweise zwischen 50°C und 80°C. Von den flüssigen Epoxidharzen unterscheiden sich letztere im wesentlichen durch ihr höheres Molekulargewicht, wodurch diese bei Raumtemperatur fest werden. Erfindungsgemäß haben die festen Epoxidharze ein Epoxidäquivalentgewicht von ≥ 400, besonders bevorzugt ist ein Epoxidäquivalentgewicht von 450 bis etwa 900.

Als flexibilisierend wirkende Epoxyharze können die an sich bekannten Addukte aus Carboxyl-terminierten Butadienacrylnitrilcopolymeren (CTBN) und flüssigen Epoxidharzen auf der Basis des Diglycidylethers vom Bisphenol A eingesetzt werden. Konkrete Beispiele sind die Umsetzungsprodukte der Hycar CTBN 1300 X8, 1300 X13 oder 1300 X15 der Firma B.F. Goodrich mit flüssigen Epoxidharzen. Weiterhin lassen sich auch die Umsetzungsprodukte von aminoterminierten Polyalkylenglykolen (Jeffamine) mit einem Überschuß an flüssigen Polyepoxiden einsetzen. Derartige Umsetzungsprodukte sind beispielsweise in der WO 93/00381 offenbart. Grundsätzlich können auch Umsetzungsprodukte von Mercaptofunktionellen Prepolymeren oder flüssige Thiokol-Polymere mit einem Überschuß an Polyepoxiden als flexibilisierende Epoxidharze erfindungsgemäß eingesetzt werden. Ganz besonders bevorzugt sind jedoch die Umsetzungsprodukte von polymeren Fettsäuren, insbesondere der Dimerfettsäure mit Epichlorhydrin, Glycidol oder insbesondere Diglycidylether des Bisphenols A (DGBA).

Da die erfindungsgemäßen härtbaren Formkörper einkomponentig ausgebildet sind und in der Hitze härtbar sein sollen, enthalten sie weiterhin einen Härter und/oder zusätzlich einen oder mehrere Beschleuniger.

Als thermisch aktivierbare oder latente Härter für das Epoxidharz-Bindemittelsystem aus den Komponenten a), b) und c) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethylethoxymethylbenzoguanamin genannt. Für die einkomponentigen, hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylhamstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silikatische Füllstoffe vom Typ des Aluminium-Magnesium-Calcium-Silicats, z. B. Wollastonit, Chlorit.

Erfindungsgemäßes Ziel ist es, die thermisch expandierbaren hitzehärtbaren Formkörper zur Herstellung von spezifisch leichten Strukturen einzusetzen. Daher enthalten sie zusätzlich zu den vorgenannten "normalen" Füllstoffen sog. Leichtfüllstoffe, die ausgewählt werden aus der Gruppe der Glashohlkugeln, Flugasche (Fillite), Kunststoffhohlkugeln auf der Basis von Phenolharzen, Epoxidharzen oder Polyestern, keramischen Hohlkugeln oder organischen Leichtfüllstoffen natürlichen Ursprungs wie gemahlene Nußschalen, beispielsweise die Schalen von Cashewnüssen, Kokosnüssen oder Erdnußschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die Matrixmaterialien für die hitzehärtbaren, thermisch expandierbaren Formkörper zusätzlich Fasern auf der Basis von Aramidfasem, Kohlenstoffasern, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasem vom Typ der Aramidfaser oder auch Polyesterfasern.

Als Treibmittel eignen sich zwar im Prinzip alle bekannten Treibmittel wie z. B. Azoverbindungen, Hydrazide und dgl., besonders bevorzugt werden jedoch die expandierbaren bzw. expandierten Kunststoffmikrohohlkugeln auf der Basis von Polyvinylidenchloridcopolymeren, diese sind unter den Namen Dualite bzw. Expancel von den Firmen Pierce & Stevens bzw. Casco Nobel im Handel erhältlich.

Weiterhin können die erfindungsgemäßen Klebstoffzusammensetzungen gängige weitere Hilfs- und Zusatzmittel wie z. B. Weichmacher, Reaktiwerdünner, Rheologie-Hilfsmittel, Netzmittel, Haftvermittler, Alterungsschutzmittel, Stabilisatoren und/oder Farbpigmente enthalten. Je nach Anforderungsprofil an den Formkörper in bezug auf seine Verarbeitungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren. Typische Bereiche für die wesentlichen Komponenten sind:

| | | |
|---|---|---|
| (a) | festes Epoxidharz | 25 - 50 Gew.% |
| (b) | flüssiges Epoxidharz | 10 - 50 Gew.% |
| (c) | flexibilisierendes Epoxidharz | 1 bis 25 Gew.% |
| (d) | Härter und Beschleuniger | 1,5 bis 5 Gew.% |
| (e) | Treibmittel | 0,5 bis 5 Gew.% |
| (f) | Leichtfüllstoff | 20 - 40 Gew.% |
| (g) | Füllstoffe | 5-20 Gew.% |
| (h) | Fasern | 0,1 - 5 Gew.% |
| (i) | Pigmente | 0 - 1 Gew.% |

Durch die Kombination von festen, flüssigen und flexibilisierenden Reaktivharzen und dem Zusatz von Fasern können formstabile, nicht klebrige Formteile entweder durch Pressen, Stanzen, Spritzguß oder durch Warmauftrag auf Metallkörper oder Kunststoffprofile hergestellt werden. Diese Kombination von Rohstoffen führt überraschenderweise bereits im nicht gehärteten Zustand zu extrem formstabilen Massen, die problemlos in Hohlkörper oder Profile jeglicher Art eingelegt werden können. Damit verbunden ist eine sehr geringe Bruchneigung (kein Glas- bzw. Splitterbruch, wie er bei anderen Formkörpern des Standes der Technik üblich ist). Damit verbunden ist optimale Verarbeitbarkeit, ein sehr gutes Wärmestandvermögen sowie keine Oberflächenklebrigkeit bei Temperaturen bis zu 40°C. Hieraus resultiert ein einfacheres und billigeres Handling (Vermeiden von Schutzfolien) sowie erhöhte Prozeßsicherheit für den Kunden.

Im gehärteten Zustand werden folgende Verbesserungen gegenüber dem bekannten Stand der Technik erzielt:
- höhere Druckfestigkeit
- geringere Sprödigkeit
- verbesserte Kälte- und Wärmefestigkeit
- verringerte Temperaturabhängigkeit der Druckfestigkeit im Bereich zwischen -30°C bis +90°C
- konstantes Kraftniveau über den Verformungsweg
- Reduzierung der Dichte (spezifisches Gewicht)
- geringe Wasseraufnahme.

Weiterhin sind für den Anwender von Vorteil die vereinfachten Arbeitsabläufe, geringere Umweltverschmutzung, da keine Verwendung von Schutzpapieren nötig ist. Die Formkörper des Standes der Technik verursachen während des Aushärteprozesses eine erhebliche Geruchsbelästigung durch übelriechende Spaltprodukte, die während des Härtungsvorganges aus den Formkörpern entweichen. Die erfindungsgemäßen Formkörper zeichnen sich dadurch aus, daß sie eine kaum wahmehmbare Geruchsentwicklung während des Aushärtens verursachen, damit entfallen aufwendige Absaugeinrichtungen. Ohne an diese Theorie gebunden zu sein, wird vermutet, daß die erheblich geringere Geruchsentwicklung bei den erfindungsgemäßen Formkörpern u.a. auf die Auswahl der Epoxidharze zurückzuführen ist. Die erfindungsgemäß eingesetzten Epoxidharze haben ein höheres mittleres Molekulargewicht. Außerdem werden vorzugsweise geringere Mengen eines besser wirkenden Härter/Beschleunigersystems eingesetzt und es wird vorzugsweise auf die Verwendung von Treibmitteln vom Typ der Azoverbindungen verzichtet.

Weiterhin bewirkt die erfindungsgemäße Verwendung der Formkörper eine Verbesserung der Crash-Sicherheit von damit gebauten Fahrzeugen sowie eine Komforterhöhung durch einen Steifigkeitsgewinn der Karosserie bei gleichzeitiger Gewichtsreduzierung für das gesamte Fahrzeug.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

### Beispiele

### Beispiel 1

In einem evakuierbaren Laborkneter wurden die folgenden Bestandteile bis zur Homogenität gemischt:

| | |
|---|---|
| festes Epoxidharz, Molekulargewicht etwa 880, Schmelzbereich 50 bis 62°C, Epoxyäquivalent 475, | 38 Teile |
| flüssiges Epoxidharz auf Basis DGBA, Epoxidäquivalent 250 | 15 Teile |
| Epoxidharz auf Basis Bisphenol A/Dimer-Fettsäure, Epoxidäquivalent 700 | 5 Teile |
| Glasmikrohohlkugeln (Scotchlite VS 5500, Druckfestigkeit ca 38 MPa, Fa. 3M) | 28 Teile |
| Dicyandiamid/Beschleuniger (Epicure 108 FF, Fa. Shell) | 2,5 % |
| Treibmittel (Kunststoffhohlkugeln "Expancel "DU 140", Fa. Pierce & Stevens) | 1,2 Teile |
| Pigment | 0,4 Teile |
| Füllstoffe | 9,5 % |
| Kevlar 29, Aramidfaser | 0 bis 0,6 Teile |

In Variationen des Faseranteils wurden das Wärmestandvermögen, d. h. der Ablauf des ungehärteten Harzes, die Druckfestigkeit im Druckversuch sowie die Sprödigkeit bestimmt. Die Ergebnisse sind in der nachfolgenden Tabelle aufgeführt.

**Tabelle 1**

| Beispiele | 1 | 2 | 3 | 4 | 5 |
|---|---|---|---|---|---|
| Faseranteil [%] | 0 | 0,2 | 0,4 | 0,5 | 0,6 |

| Wärmestandvermögen (Ablauf in mm) | | | | | |
|---|---|---|---|---|---|
| 30 min 80°C | 69 | 37 | 12 | 4 | 3 |
| + 30 min 180°C | 78 | 41 | 19 | 8 | 7 |

| Druckfestigkeit: [kN] | | | | | |
|---|---|---|---|---|---|
| -30°C | 38 | 31 | 34 | 30 | - |
| RT | 30 | 28 | 26 | 26 | - |
| + 80°C | 18 | 19 | 17 | 20 | - |

| Mittleres Kraftniveau | | | | | |
|---|---|---|---|---|---|
| -30°C | 28 | - | - | 29 | - |
| RT | 36 | - | - | 25 | - |
| + 80°C | 22 | - | - | 23 | - |

Wie aus der vorstehenden Tabelle ersichtlich, wird das Wärmestandvermögen, d. h. die Resistenz gegen kalten Fluß der ungehärteten Formteile durch Zugabe von Fasern signifikant verbessert, wohingegen Druckfestigkeit und Sprödigkeit auf vergleichbarem Niveau wie die Zusammensetzungen ohne Fasern sind.

Zur Bestimmung des Wärmestandvermögens wurde aus den Zusammensetzungen ein rechteckiges Formteil der Größe ca. 80 x 50 x 8mm hergestellt und am oberen Ende eines senkrecht gestellten Bleches der Größe 100 x 200 x 0,8 mm angebracht.

Nach ca. 30 minütigem Stehen bei Raumtemperatur wurde die Anordnung 30 min bei 80°C senkrecht in den Umluftofen gestellt. Nach dem Erkalten wurde die Ablaufstrecke des Formteils markiert. Danach wurde die Anordnung erneut 30 min bei 180°C in senkrechter Stellung erhitzt. Nach erneutem Erkalten wurde die gesamte Ablaufstrecke in mm bestimmt.

Zur Ermittlung der Druckfestigkeit wurde in einer offenen Form der Dimension 30 x 30 x 100 mm das Material zu einem Prüfkörper ausgehärtet. Aus dem daraus erhaltenen Block wurden 3 Prüfkörper der Größe 30 x 30 x 30 mm ausgesägt und der Druckprüfung zwischen zwei Preßbacken einer Kraftmeßeinrichtung unterzogen. Dabei wurde der Kräfteverlauf in Abhängigkeit des Deformationsweges bestimmt. Der Wert für die Druckfestigkeit ergab sich aus dem Maximum der aufgewendeten Kraft.

Als Maß für die Sprödigkeit wurde Differenz zwischen Maximalkraft und dem mittleren Wert der Kraft für das Plateau über den Deformationsweg definiert. Je weniger sich die Maximalkraft und der Mittelwert des Plateaus unterscheiden, umso geringer die Sprödigkeit.

Die erfindungsgemäßen Formteile wiesen nach dem Extrudieren bzw. Formen und Abkühlen auf Raumtemperatur eine völlig klebfreie Oberfläche auf, obwohl diese Formkörper noch hitzehärtbar und thermisch expandierbar waren. Formkörper des Standes der Technik zeigten eine sehr hohe Oberflächenklebrigkeit.

Beim Aushärten der erfindungsgemäßen Formkörper bei Temperaturen bis ca 180 bis 200 °C trat ein kaum wahrnehmbarer Geruch auf. Bei dem Aushärten von Formkörpern gemäß Stand der Technik wurde eine unerträgliche Geruchsbelästigung wahrgenommen, so daß diese Formkörper des Standes der Technik nur unter stark wirkenden Absaugeinrichtungen ausgehärtet werden konnten.

## Patentansprüche

1. Hitzehärtbarer, thermisch expandierbarer Formkörper enthaltend
(a) mindestens ein festes reaktives Harz
(b) mindestens ein flüssiges reaktives Harz
(c) mindestens ein flexibilisierendes reaktives Harz
(d) Härter und/oder Beschleuniger
(e) Treibmittel.

2. Formkörper nach Anspruch 1, **dadurch gekennzeichnet, daß** er bei Raumtemperatur nicht klebrig ist.

3. Formkörper nach Anspruch 1 oder 2, **dadurch gekennzeichnet, daß** das feste (a), das flüssige (b) und das flexibilisierende (c) Harz Epoxidharze sind.

4. Formkörper nach Anspruch 3, **dadurch gekennzeichnet, daß** das feste Epoxidharz (a) einen Schmelzpunkt zwischen 45°C und 90°C hat.

5. Formkörper nach Anspruch 3, **dadurch gekennzeichnet, daß** das feste Epoxidharz (a) einen Schmelzpunkt zwischen 50°C und 80°C hat.

6. Formkörper nach Anspruch 3 bis 5, **dadurch gekennzeichnet, daß** das flüssige Epoxidharz (b) ein Molgewicht größer als 350 hat.

7. Formkörper nach Anspruch 3 bis 5, **dadurch gekennzeichnet, daß** das flüssige Epoxidharz (b) ein Molgewicht größer als 450 hat.

8. Formkörper nach Anspruch 3 bis 7, **dadurch gekennzeichnet, daß** das flexibilisierende Epoxidharz ausgewählt wird aus kautschukmodifizierten Epoxidharzen, polyurethanmodifizierten Epoxidharzen, Addukten aus aminoterminierten Polyoxyalkylenen und Polyepoxiden, Addukten aus Dimerfettsäure und Bisphenol-A-diglycidylethern, Addukten von Polyetherpolyolen an Epoxidharze, Polysulfid- oder Polymercaptan-modifizierten Epoxidharzen oder Mischungen der vorgenannten Harze.

9. Formkörper nach Anspruch 3 bis 8, **dadurch gekennzeichnet, daß** als Härter Dicyandiamid in einer Menge bis zu 5 Gew.% bezogen auf die Gesamtzusammensetzung und gegebenenfalls ein oder mehrere Beschleuniger verwendet wird.

10. Formkörper nach mindestens einem der vorhergehenden Ansprüche, **dadurch gekennzeichnet, daß** er zusätzlich Füllstoffe enthält, wobei mindestens ein Teil die Füllstoffe Leichtfüllstoffe ausgewählt aus Glashohlkugeln, Fillite (Flugasche), Kunststoffhohlkugeln auf der Basis von Phenolharzen, Epoxidharzen oder Polyestern, keramischen Hohlkugeln oder organische Leichtfüllstoffe nativen Ursprungs wie gemahlene Nußschalen, Korkmehl oder Kokspulver sind.

11. Formkörper nach Anspruch 10, **dadurch gekennzeichnet, daß** die organischen Leichtfüllstoffe nativen Ursprungs gemahlene Nußschalen, Korkmehl oder Kokspulver sind.

12. Formkörper nach mindestens einem der vorhergehenden Ansprüche, **dadurch gekennzeichnet, daß** das Treibmittel (e) expandierbare Mikrohohlkugeln sind.

13. Formkörper nach mindestens einem der vorhergehenden Ansprüche, **dadurch gekennzeichnet, daß** er Fasern auf der Basis von Aramidfasem, Kohlenstoff-Fasern, Glasfasern, Polyamidfasern, Polyethylenfasern oder Polyesterfasern enthält.

14. Formkörper nach mindestens einem der Ansprüche 3 bis 13 enthaltend
| | | |
|---|---|---|
| (a) | festes Epoxidharz | 25 - 50 Gew.% |
| (b) | flüssiges Epoxidharz | 10 - 50 Gew.% |
| (c) | flexibilisierendes Epoxidharz | 1 bis 25 Gew.% |
| (d) | Härter und Beschleuniger | 1,5 bis 5 Gew.% |
| (e) | Treibmittel | 0,5 bis 5 Gew.% |
| (f) | Leichtfüllstoff | 20 - 40 Gew.% |
| (g) | Füllstoffe | 5-20 Gew.% |
| (h) | Fasern | 0,1 - 5 Gew.% |
| (i) | Pigmente | 0 - 1 Gew.% |
wobei die Summe der Gesamtbestandteile 100 Gew.% ergibt.

15. Verwendung der Formkörper nach mindestens einem der vorhergehenden Ansprüche zur Versteifung und Verstärkung von flächigen Blechteilen und/oder von metallischen Hohlstrukturen.

16. Verwendung der Formkörper nach Anspruch 15 zur Versteifung und Verstärkung von flächigen Blechteilen und/oder von metallischen Hohlstrukturen ausgewählt aus von Karosseriehohlteilen, Karosserierahmen, -trägern und -säulen im Automobilbau.

17. Verfahren zum Versteifen und/oder Verstärken von Karosseriebauteilen, **gekennzeichnet durch** die folgenden wesentlichen Verfahrensschritte
(a) Mischen der Bestandteile nach mindestens einem der Ansprüche 1 bis 14,
(b) Extrudieren oder Gießen der Formteile bei Temperaturen von 60°C bis 110°C,
(c) Abkühlen der Formteile,
(d) Aufbringen der Formteile auf das metallische Substrat oder Einbringen in den zu versteifenden Hohlraum gegebenenfalls unter Erwärmen auf den Erweichungsbereich des Formkörpers
(e) Erwärmen auf Temperaturen zwischen 110°C und 200°C, wobei das Volumen des Formkörpers um 50 bis 100 % expandiert und die Reaktionsharz-Matrix zu einem Duroplasten aushärtet.

18. Verfahren nach Anspruch 17, **dadurch gekennzeichnet, daß** der Verfahrensschritt (b) bei 70°C bis 90°C erfolgt.

19. Verfahren nach Anspruch 17 oder 18, **dadurch gekennzeichnet, daß** der Verfahrensschritt (e) zwischen 130°C und 180°C erfolgt.

20. Fahrzeug oder metallisches Bauteil, **dadurch gekennzeichnet, daß** es nach einem Verfahren gemäß Anspruch 17 bis 19 versteift oder verstärkt wurde.

## Claims

1. A thermoset, heat-expandable moulding containing
(a) at least one solid reactive resin,
(b) at least one liquid reactive resin,
(c) at least one flexibilizing reactive resin,
(d) hardeners and/or accelerators,
(e) blowing agents.

2. A moulding as claimed in claim 1, **characterized in that** it is non-tacky at room temperature.

3. A moulding as claimed in claim 1 or 2, **characterized in that** the solid resin (a), the liquid resin (b) and the flexibilizing resin (c) are epoxy resins.

4. A moulding as claimed in claim 3, **characterized in that** the solid epoxy resin (a) has a melting point of 45 to 90°C.

5. A moulding as claimed in claim 3, **characterized in that** the solid epoxy resin (a) has a melting point of 50 to 80°C.

6. A moulding as claimed in claims 3 to 5, **characterized in that** the liquid epoxy resin (b) has a molecular weight of more than 350.

7. A moulding as claimed in claims 3 to 5, **characterized in that** the liquid epoxy resin (b) has a molecular weight of more than 450.

8. A moulding as claimed in claims 3 to 7, **characterized in that** the flexibilizing epoxy resin is selected from rubber-modified epoxy resins, polyurethane-modified epoxy resins, adducts of aminoterminated polyoxyalkylenes and polyepoxides, adducts of dimer fatty acid and biphenyl A diglycidyl ethers, adducts of polyether polyols with epoxy resins, polysulfide- or polymercaptan-modified epoxy resins or mixtures of the above-mentioned resins.

9. A moulding as claimed in any of claims 3 to 8, **characterized by** the use of dicyanodiamide in a quantity of up to 5% by weight, based on the composition as a whole, as hardener and optionally one or more accelerators.

10. A moulding as claimed in at least one of the preceding claims, **characterized in that** it additionally contains fillers, the fillers being at least partly selected from hollow glass beads, fillite (light ash), hollow plastic beads based on phenolic resins, epoxy resins or polyesters, ceramic hollow beads or organic light fillers of native origin, such as ground nut shells, cork meal or coke powder.

11. A moulding as claimed in claim 10, **characterized in that** the organic light fillers of native origin are ground nut shells, cork meal or coke powder.

12. A moulding as claimed in at least one of the preceding claims, **characterized in that** the blowing agent (e) consists of expandable hollow microbeads.

13. A moulding as claimed in at least one of the preceding claims, **characterized in that** it contains fibres based on aramide fibres, carbon fibres, glass fibres, polyamide fibres, polyethylene fibres or polyester fibres.

14. A moulding as claimed in at least one of claims 3 to 13 containing
| | | |
|---|---|---|
| (a) | solid epoxy resin | 25 - 50% by weight |
| (b) | liquid epoxy resin | 10 - 50% by weight |
| (c) | flexibilizing epoxy resin | 1 - 25% by weight |
| (d) | hardener and accelerator | 1.5 - 5% by weight |
| (e) | blowing agent | 0.5 - 5% by weight |
| (f) | light filler | 20 - 40% by weight |
| (g) | fillers | 5 - 20% by weight |
| (h) | fibres | 0.1 - 5% by weight |
| (i) | pigments | 0 - 1% by weight, |
the sum total of the constituents being 100% by weight.

15. The use of the moulding claimed in at least one of the preceding claims for stiffening and strengthening flat metal parts and/or hollow metal structures.

16. The use of the moulding as claimed in claim 15 for stiffening and strengthening flat metal parts and/or hollow metal structures selected from hollow bodywork parts, bodywork frames, supports and pillars in car manufacture.

17. A process for stiffening and strengthening bodywork parts comprising the following key steps:
(a) mixing the constituents claimed in at least one of claims 1 to 14,
(b) extruding or casting the mouldings at temperatures of 60 to 110°C,
(c) cooling the mouldings.
(d) applying the mouldings to the metal substrate or introducing them into the void to be stiffened, optionally with heating to the softening range of the moulding,
(e) heating to temperatures of 110 to 200°C, the volume of the moulding expanding by 50 to 100% and the epoxy resin matrix curing to form a thermoset.

18. A process as claimed in claim 17, **characterized in that** step (b) is carried out at 70°C to 90°C.

19. A process as claimed in claim 17 to 18, **characterized in that** step (e) is carried out at 130 to 180°C.

20. A vehicle or metal part, **characterized in that** it has been stiffened or strengthened by the process claims in claims 17 to 19.

## Revendications

1. Corps moulé expansible à chaud, thermodurcissable contenant
(a) au moins une résine réactive solide
(b) au moins une résine réactive liquide
(c) au moins une résine réactive donnant de la flexibilité
(d) des durcisseurs et/ou des accélérateurs
(e) des agents gonflants.

2. Corps moulé selon la revendication 1,
**caractérisé en ce qu'**
il n'est pas collant à la température ambiante.

3. Corps moulé selon la revendication 1 ou 2,
**caractérisé en ce que**
la résine solide (a), la résine liquide (b) et la résine donnant de la flexibilité (c) sont des résines époxy.

4. Corps moulé selon la revendication 3,
**caractérisé en ce que**
la résine époxy solide (a) a un point de fusion entre 45° et 90°C.

5. Corps moulé selon la revendication 3,
**caractérisé en ce que**
la résine époxy solide (a) a un point de fusion entre 50° et 80°C.

6. Corps moulé selon l'une des revendications 3 à 5,
**caractérisé en ce que**
la résine époxy liquide (b) a un poids moléculaire supérieur à 350.

7. Corps moulé selon l'une des revendications 3 à 5,
**caractérisé en ce que**
la résine époxy liquide (b) a un poids moléculaire supérieur à 450.

8. Corps moulé selon l'une des revendications 3 à 7,
**caractérisé en ce que**
la résine époxy donnant de la flexibilité est choisie parmi des résines époxy modifiées au caoutchouc, des résines époxy modifiées au polyuréthane, des produits d'addition à base de polyoxyalkyles aminoterminés et de polyépoxydes, de produits d'addition à base d'acide gras dimère et de biphénol-A-diglycidyléther, de produits d'addition de polyétherpolyoles sur des résines époxy, des résines époxy modifiées au polysulfide ou au polymercaptan ou des mélanges de ces résines.

9. Corps moulé selon l'une des revendications 3 à 8,
**caractérisé en ce qu'**
on utilise comme durcissant une dicyandiamide à un taux pondéral allant jusqu'à 5 % de l'ensemble, avec éventuellement un ou plusieurs accélérateurs.

10. Corps moulé selon au moins l'une des revendications précédentes,
**caractérisé en ce qu'**
il contient en plus des charges, dont au moins une partie est constituée par des charges légères choisies parmi des billes creuses en verre, de la fillite (cendre volante), des billes creuses en matière plastique à base de résines phénoliques, résines époxy ou polyesters, des billes creuses en céramique ou des charges organiques d'origine naturelle telles que de la coquille de noix broyée, de la farine de liège, ou de la poudre de coke.

11. Corps moulé selon la revendication 10,
**caractérisé en ce que**
les charges organiques d'origine naturelle sont de la coquille de noix broyée, de la farine de liège ou de la poudre de coke.

12. Corps moulé selon au moins l'une des revendications précédentes,
**caractérisé en ce que**
l'agent gonflant (e) est constitué par des microbilles creuses expansées.

13. Corps moulé selon au moins l'une des revendications précédentes,
**caractérisé en ce qu'**
il contient des fibres à base de fibres d'aramide, de fibres de carbone, de fibres de verre, de fibres de polyamide, de fibres de polyéthylène ou de fibres de polyester.

14. Corps moulé selon l'une des revendications 3 à 13, contenant les produits suivants avec les taux pondéraux suivants :
| | | |
|---|---|---|
| (a) | résine époxy solide | 25 à 50 % |
| (b) | résine époxy liquide | 10 à 50 % |
| (c) | résine époxy donnant de la flexibilité | 1 à 25 % |
| (d) | durcisseur et accélérateur | 1,5 à 5 % |
| (e) | agent gonflant | 0,5 à 5 % |
| (f) | charge légère | 20 à 40 % |
| (g) | charge | 5 à 20 % |
| (h) | fibres | 0,1 à 5% |
| (i) | pigments | 0 à 1 % |
la somme des taux de l'ensemble des composants étant de 100 %.

15. Utilisation des corps moulés selon au moins l'une des caractéristiques précédentes pour rigidifier et renforcer des pièces de tôle minces et/ou des structures métalliques creuses.

16. Utilisation des corps moulés selon la revendication 15 pour rigidifier et renforcer des tôles minces et/ou des structures métalliques creuses, qui peuvent être des pièces creuses de carrosserie, des châssis de carrosserie, des supports et des pieds-droits dans la construction automobile.

17. Procédé pour rigidifier et/ou renforcer des composants de carrosserie,
**caractérisé par** les étapes essentielles suivantes :
(a) mélanger les composants selon au moins une des revendications 1 à 14,
(b) extruder ou couler les pièces moulées à des températures allant de 60 à 110°C,
(c) refroidir les pièces moulées,
(d) déposer les pièces moulées sur le substrat métallique ou les introduire dans les volumes creux à rigidifier, éventuellement avec chauffage à une température située dans la zone de ramollissement de la matière moulée
(e) chauffage à températures comprises entre 110 et 200°C, produisant l'expansion de 50 à 100 % de volume de la matière moulée et le durcissement de la matière de résine réactive passant à l'état de duroplaste.

18. Procédé selon la revendication 17,
**caractérisé en ce que**
l'étape (b) du procédé a lieu entre 70 et 90°C.

19. Procédé selon l'une quelconque des revendications 17 ou 18,
**caractérisé en ce que**
l'étape (e) du procédé a lieu entre 130 et 180°C.

20. Véhicule automobile ou composant métallique,
**caractérisé en ce qu'**
il est rigidifié ou renforcé par application d'un procédé selon l'une des revendications 17 à 19.
